Europäisches Patentamt

European Patent Office

Office européen des brevets

(19)

(11) Publication number: **0 041 578**

A1

(12) # EUROPEAN PATENT APPLICATION
published in accordance with Art. 158(3) EPC

(21) Application number: 81900013.4

(22) Date of filing: 08.12.80

Data of the international application taken as a basis:

(86) International application number:
PCT/JP80/00301

(87) International publication number:
WO81/01759 (25.06.81 81/15)

(51) Int. Cl.³: **G 06 F 3/05**
**H 02 H 3/05**

(30) Priority: 12.12.79 JP 163017/79

(43) Date of publication of application:
16.12.81 Bulletin 81/50

(84) Designated Contracting States:
FR

(71) Applicant: MITSUBISHI DENKI KABUSHIKI KAISHA
2-3, Marunouchi 2-chome Chiyoda-ku
Tokyo 100(JP)

(72) Inventor: HATATA, Minoru Mitsubishi Denki K.K.
Seigyo Seisakusho, 1-2 Wadasaki-cho, 1-chome
Hyogo-ku, Kobe-shi Hyogo 652(JP)

(72) Inventor: GOUDA, Tadahiro Mitsubishi Denki K.K.
Seigyo Seisakusho, 1-2 Wadasaki-cho, 1-chome
Hyogo-ku, Kobe-shi Hyogo 652(JP)

(74) Representative: CHAUCHARD, Robert et al,
c/o Cabinet Malemont 42, avenue du Président Wilson
F-75116 Paris(FR)

(54) DEVICE FOR MONITORING ABNORMALITY IN SAMPLED SIGNALS.

(57) Device for detecting an abnormal condition in an apparatus on the basis of sampled signals obtained by sampling a periodic AC signal at a predetermined time interval. The device includes a memory circuit (3) for storing n ($n \geq 3$) consecutive items of data obtained by digitally converting a periodic AC signal which has been sampled at predetermined time intervals, and a coincidence-detection circuit (4) for checking whether the stored content of the memory circuit is the same for each sampling, thereby to detect an abnormality in the sampled signals. The device is therefore suitable for monitoring malfunctions in the analogue data-input section of a digital processing unit.

EP 0 041 578 A1

- 1 -

SPECIFICATION

TITLE OF THE INVENTION:

SAMPLING SIGNAL ABNORMAL
MONITORING DEVICE

FIELD OF TECHNOLOGY:

The present invention relates to a sampling signal abnormal monitoring device which detects the abnormal state of a device from the signals sampled from periodical AC signals at each constant cycle.

BACKGROUND OF TECHNOLOGY:

In the device for sampling periodical AC signals such as current signals in a power system at each constant cycle (usually 30 degree interval); performing digital conversion and feeding the data into a digital processing device, there is not the possibility that the sampled data have a constant periodical property and have not the consistency beside the both side data at a center of the peak value in view of the characteristics of the current signals.

When continuous three data are the same, there is the possibility of the abnormal state in the sampling circuit or the digital conversion circuit etc.

In the conventional test for an operation of a device for sampling such current signals in the power system to perform the digital conversion, the input to the device is switched to the test side to feed known test signals into the device to test the output of the device. However, this method is different from the test of the practical state of the operation of the device from the precise viewpoint since the input is fed from the test side. Therefore, such method has a disadvantage of low reliability of the test results.

## SUMMARY OF THE INVENTION:

The present invention is to overcome the above-mentioned disadvantages of the conventional device and the object of the present invention is to provide a sampling signal abnormal monitoring device which can detect the abnormal state of a device comprising a sampling circuit and a digital conversion circuit with an error of data by testing consistency of continuous n data ($n \geq 3$) obtained by sampling in view of characteristics of periodical AC signals input into the device.

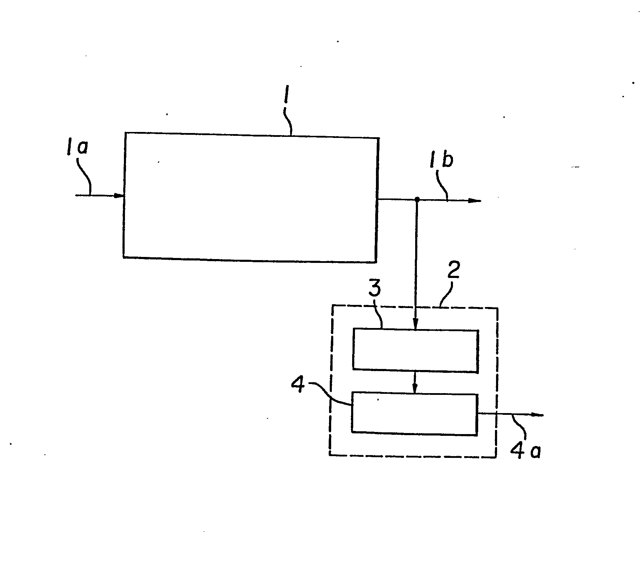

## BRIEF DESCRIPTION OF THE DRAWING:

The drawing is a block diagram of one embodiment of an abnormal monitoring device according to the present invention.

PREFERRED EMBODIMENT OF THE INVENTION:

Referring to the drawing, one embodiment of the present invention will be illustrated. In the drawing, a monitored device (1) comprises a sampling circuit for sampling AC signals (1a) of the input electric power system each 30 degree of the cycle and a digital conversion circuit for digitally converting signals output from the sampling circuit. The data given by the digital conversion are input as the signals (1b) into the outer digital device (not shown) and the abnormal monitoring device (2). The abnormal monitoring device (2) comprises a memory circuit (3) for recording continuous n signals $(n \geq 3)$ such as continuous three signals (for three samples) (1b) and a consistency detecting circuit (4) for testing the consistency of data for three samples memorized in the memory circuit (3) to output the signal (4a) for abnormal state in the case of the consistency as "1".

In the operation, if the monitored device (1) is in the normal state, continuous three consistent data are not given as the signals (1b) in view of the characteristics of the AC signals (1a). The monitored device (1) is, however, in the abnormal state in view of certain reason to continue three consistent data as the signals (1a) whereby the data of the memory circuit (3) are the same. This state is detected by the consistency detecting circuit (4) and the signal (4a) is in "1" to detect the abnormal state. When the input is zero, the abnormal monitoring device is also operated. This trouble can be overcome by the memorization of the contact condition of a breaker or an interrupter for the condition. The addition of the condition for the breaker or the interrupter can be attained by connecting a discrimination circuit or can be given by the other manner.

## INDUSTRIAL UTILITY:

The present invention can be applied for monitoring fault of an analog data input part of a digital processing device.

CLAIMS:

A sampling signal abnormal monitoring device which comprises a memory circuit for sampling periodical AC signals at each constant cycle and memorizing continuous n data ($n \geqq 3$) of data obtained by digital conversions, and a consistency detecting circuit for determining the consistency of data of said memory circuit.

# INTERNATIONAL SEARCH REPORT

**0041578**

International Application No PCT/JP80/00301

## I. CLASSIFICATION OF SUBJECT MATTER (if several classification symbols apply, indicate all) [3]

According to International Patent Classification (IPC) or to both National Classification and IPC

Int. Cl.$^3$  G06F 3/05, H02H 3/05

## II. FIELDS SEARCHED

### Minimum Documentation Searched [4]

| Classification System | Classification Symbols |
|---|---|
| I P C | G06F 3/05, H02H 3/05, H03K 13/34 |

Documentation Searched other than Minimum Documentation
to the Extent that such Documents are Included in the Fields Searched [5]

| | |
|---|---|
| Jitsuyo Shinan Koho | 1926 - 1979 |
| Kokai Jitsuyo Shinan Koho | 1971 - 1979 |

## III. DOCUMENTS CONSIDERED TO BE RELEVANT [14]

| Category [*] | Citation of Document, [16] with indication, where appropriate, of the relevant passages [17] | | Relevant to Claim No. [18] |
|---|---|---|---|
| A | JP, A, 50-66142 Tokyo Denryoku Kabushiki Kaisha | 1975-6-4 | 1 |
| A· | JP, A, 51-92143 Tokyo Denryoku Kabushiki Kaisha | 1976-8-12 | 1· |
| A | JP, A, 51-92144 Tokyo Denryoku Kabushiki Kaisha | 1976-8-12 | 1 |

* Special categories of cited documents: [15]

"A" document defining the general state of the art
"E" earlier document but published on or after the International filing date
"L" document cited for special reason other than those referred to in the other categories
"O" document referring to an oral disclosure, use, exhibition or other means

"P" document published prior to the International filing date but on or after the priority date claimed
"T" later document published on or after the International filing date or priority date and not in conflict with the application, but cited to understand the principle or theory underlying the invention
"X" document of particular relevance

## IV. CERTIFICATION

| Date of the Actual Completion of the International Search [3] | Date of Mailing of this International Search Report [2] |
|---|---|
| February 23, 1981 (23.02.1981) | March 2, 1981 (02.03.81) |
| International Searching Authority [1] | Signature of Authorized Officer [20] |
| Japanese Patent Office | |

Form PCT/ISA/210 (second sheet) (October 1977)